# EUROPEAN PATENT SPECIFICATION

(11) **EP 0 938 416 B1**
(45) Date of publication and mention of the grant of the patent: **04.10.2001**
(21) Application number: 97911375.0
(22) Date of filing: 11.11.1997
(51) Int. Cl.: B41M 3/14, C09D 11/00, G07F 7/12, C09K 11/02, G06K 19/02, B42D 15/00

(54) **IMPROVEMENT IN SECURITY SYSTEMS**
VERBESSSERUNGEN BEI SICHERHEITSSYSTEMEN
AMELIORATIONS APPORTEES A DES SYSTEMES DE SECURITE

(30) Priority: 12.11.1996 GB 9623485
(43) Date of publication of application: 01.09.1999
(73) Proprietor: SMARTWATER LIMITED, Walsall, West Midlands WS1 1QL (GB)
(72) Inventor: CLEARY, Michael, Thurstaston, Wirral L61 0HH (GB)
(74) Representative: Thomson, Paul Anthony
(86) International application number: GB9703086
(87) International publication number: WO9821046

(56) References cited:
- EP-A- 0 595 583
- DE-A- 4 114 732
- DE-A- 4 236 143
- GB-A- 2 245 583
- PATENT ABSTRACTS OF JAPAN vol. 8, no. 210 (M-328) [1647] , 26 September 1984 & JP 59 098891 A (DAI NIPPON INSATSU KABUSHIKI KAISHA), 7 June 1984,

## Description

The present invention concerns improvements in or relating to the security of articles, goods, vehicles or premises. More particularly, the present invention provides a composition and method for the prevention of those acts listed hereunder utilizing a combination of deterrence and also identification of those involved in:
a) Unauthorized removal of articles or goods including cash from vehicles, buildings and/or premises;
b) Vandalism of articles, goods, buildings and/or premises;
c) Unauthorized entry into restricted areas;
d) Acts, possibly violent, by groups, against state, military, police or public property or personnel;
e) Counterfeiting of goods.

In addition, the invention can be used as a means for tracking goods within an organization, or in the stream of commerce.

Unauthorized removal or stealing of articles or goods is an increasing problem. A recent survey has shown that the stealing of articles or goods is predominantly based on opportunism. Such survey showed that unauthorized removal of articles or goods was carried out in a ratio of opportunists to hardened criminals of 80% : 20%.

One situation in which unauthorized removal of articles or goods has taken place is in buildings such as parcel distribution centers, warehouses, storage depots, department stores and the like. In such locations, articles or goods, suitably in the form of parcels, are constantly transported throughout the building. During such transportation, certain parcels may be stolen, and it is often difficult to catch the thief, particularly when there are a large number of employees operating in the building concerned. In addition to pilfering of articles or goods, in certain circumstances vandalism has been a problem, with the articles or goods not having been stolen but, rather, damaged instead.

Another situation in which unauthorized removal of articles or goods has taken place is in connection with theft of articles or goods from premises or vehicles. Such unauthorized removal is an increasing problem and it is often difficult for authorities to convict a thief or burglar since it not always possible to prove that the thief or burglar was present at a particular robbery.

Various types of chemicals have been considered for application to the surface of an article, goods or premises. A composition utilizing a dyestuff has been proposed, but was not considered appropriate since the dye can be seen on the article, goods or premises. Another prior arrangement relates to the use of a fluorescent material dispersed in a carrier. The solid fluorescent material is dispersed in a grease and is then smeared onto surfaces or articles liable to unwanted attention. The disadvantages of such arrangement is that the material when applied is greasy or slippery to the touch, and also has a granular feel because of undissolved particles present therein.

GB-A-2 245 583 discloses an identification composition, comprising an indicator material (fluorescent material), trace materials serving to identify the composition (metal or organic) and a solvent medium for the indicator material containing a volatile component.

### SUMMARY OF THE INVENTION

Accordingly, the present invention is based on the provision of a composition and method whereby, the composition applied to a surface and can later be identified as to source with a high degree of certainty.

It is an object of the present invention to provide a composition and method for reducing unauthorized removal of, or damage to, articles or goods and for preventing damage to property.

It is a further object of the present invention to provide a composition and method whereby, when the composition has been applied to a surface, any person who touches the surface can be identified.

It is a still further object of the invention to provide a composition and method for use in buildings and/or premises or with vehicles which can be utilized in a sprinkler or like spray system, for identifying the thief or burglar.

According to the present invention there is provided a composition for tracing or identifying goods or their theft comprising:
an indicator material;
a plurality of separately identifiable trace materials which can be varied in such a manner as to produce unique formulations, the combination of trace materials being varied by modelling each composition on a binary string to produce a unique product; and
a solvent system for the indicator material, said solvent system containing a solvent which is volatile under conditions of application.

The term "trace materials" applies herein to materials which would not normally be present in the environment of use. The most commonly used trace materials are metal compounds, although organic moieties which are stable under conditions of use are also useful, since organic moieties can be identified by a variety of spectral and chrcmatographic means. Examples of useful organic trace materials are 1, 2, 3, 4-tetrahydrocarbazole and 2,6-methoxybenzonitrile.

The compositions also contain an indicator material, which can quickly provide a preliminary, gross indication of the presence of a composition according to the invention. The indicator material can either be "overt" or "covert." An overt material is typically one which can be seen unaided by technology, such as a dye or pigment. With an overt indicator, the fact of an application and the area of application are immediately evident from an observation of the article or person.

A covert indicator will remain hidden until some technical means is used to make it obvious. Usually, a covert indicator will become visible upon application of a radiation means other than visible light, and of these, fluorescent indicators are most common. Thus, the covert indicator will often be at least one fluorescent material which is soluble in the solvent system, and which is easily detectable upon examination with ultraviolet light. Conceivably, a low level radioactive material could also be used, as well as any other material which would easily provide a gross indication that the composition is present upon a quick examination.

Trace materials can thereby be combined in a way which gives good evidential value to law enforcement agencies, as each unique formulation is allocated to a particular premises, location or person, and this information is stored in a central database which can be accessed by a law enforcement agency receiving the report of a laboratory analyzing the mixtures which are to be discussed.

The trace materials are assigned constant positions in a binary string with their presence is given by a "1", and their absence by a "0". If, for example, one were to set a limit of thirty digits for the string, one could begin with combinations of two trace materials, and generate all combinations containing any two trace materials. One could then go to groups of three trace materials, and generate all combinations of any three trace materials. This could continue until the number of trace materials is equal to the number of digits in the string.

With a thirty digit string, the total number of unique combinations of trace materials is approximately one billion. Thus, it is possible to prepare one billion mixtures having compositions based on unique binary sequences, the compositions thereby being unique.

Binary strings are provided as exemplary of the identification schemes which can be used. Strings of other lengths, such as octal and hexadecimal strings, can also be used.

The unique nature of each composition can be found from sampling the product after application and subjecting the sample to chemical analysis. The composition can then be stored in a database, allocated to a premises, location, or person, and the source of goods located at a later time can be traced to the premises, location or person via the composition.

Of course, the greater the number of trace materials used, the greater the certainty in identification later on, since the chance presence of trace materials can be ruled out. In practice, at least five trace materials will preferably be used in combination to provide a high degree of certainty in identification, although fewer materials may be used, especially when court proceedings are not involved.

A method is thus provided that can produce formulations which can be varied uniquely through the systematic combination of trace materials by modelling their composition on binary strings, thereby producing large numbers of unique products. The use of a database then allows true ownership of stolen goods to be determined on a worldwide basis.

In use, the composition of the invention is applied to at least a portion of the surface of such articles or goods, or to a container therefor, or at least a portion of a property or surrounding area. Thus, the source of stolen goods can be positively identified. Further, if the composition of the invention is transferred to the person involved in the theft or damage, the person can also be positively identified, first by the use of the gross indicator means, such as with a UV-light examination, then by more sophisticated trace material analysis means.

Also according to the present invention there is provided a method for tracing or identifying goods or their theft, comprising:
applying to a surface of said goods a composition of the invention, and permitting evaporation of the volatile solvent, said composition after such evaporation being colourless and odourless and having no feel thereto;
establishing a database in which a unique combination of said plurality of said trace materials is assigned to a unique source;
detecting said composition on the basis of said indicator material and identifying the plurality of said trace materials therein; and
determining the unique source from said database.

When the indicator means is fluorescent, the composition can include one or more of any suitable fluorescent materials. However, it has been found that coumarin, oxazinone, and stilbene derivatives are preferred, but fluorescein derivatives can also be utilized.

It is possible to utilize coumarin derivatives, preferably 7-hydroxy-4-methyl coumarin or 7-diethylamino-4-methyl coumarin. Fluorescein derivatives, preferably sodium fluorescein are also usable.

It is possible to utilise a fluorescent material which when exposed to UV light fluoresces in a particular colour, each particular fluorescent material being selected for a particular customer, so that when the composition containing the selected fluorescent material is applied to a surface of articles or goods, then any unauthorized removal of such articles or goods can be linked back to the particular customer as the source of goods. This is of use when a thief or burglar is apprehended and the fluorescent material which was transferred to the thief or burglar is identified by the use of UV-light, thereby linking the thief or burglar with a particular location.

It is further possible to utilize a combination of two fluorescent materials having differing max absorption or emission frequencies. It is possible to identify the two materials by utilizing a UV-absorption spectrum or a fluorescent emission spectrum. Accordingly, such combination of fluorescent materials, when applied to a surface of articles or goods and when transferred to a thief or burglar, can positively link the thief or burglar with a particular location, with no chance of a pleading by the thief or burglar that he had picked up or touched fluorescent material accidentally or innocently.

The fluorescent material is preferably utilized in spray form and can be combined with various solvent systems and surfactants. The fluorescent material is suitably present in an amount of 0.1 to 40% by weight of the composition.

The composition preferably contains one or more carrier materials, such as a polymer material which forms a film upon drying. The preferred polymers for this purpose are polymethyl methacrylate and polystyrenebutadiene, supplied in aqueous emulsion form. For spray application, the polymer concentration will be fairly low, around 3-10 grams of emulsion in 100 ml diluent, which compositions to be painted onto articles can contain much higher concentrations of polymer, preferably 60-80 grams in 100 ml diluent.

Another carrier material which can be used comprises microsponges which absorb the trace materials, and which can be suspended in a polymer emulsion carrier.

The solvent medium preferably comprises a mixture of a volatile solvent at ambient temperature or at the temperature of application and a non-volatile solvent at ambient temperature. The volatile solvent is preferably a low boiling alcohol, preferably isopropyl alcohol or t-butanol. The nonvolatile solvent is preferably isopropyl myristate or glycerol trioleate.

In the case of an aerosol, the composition will also include a propellant, suitably butane and suitably one or more surfactants. The surfactant is preferably polyethylene glycol or polypropylene glycol.

A preferred composition for use in the invention comprises, in addition to the plurality of trace materials, a mixture of a fluorescent material together with isopropyl alcohol as the volatile solvent and isopropyl myristate as the non-volatile solvent. When applied in spray form the isopropyl alcohol evaporates leaving a film of fluorescent material and isopropyl myristate applied to a selected surface.

It is believed that in a spray composition, such a combination of solvents may be effective in two ways. As the isopropyl alcohol evaporates the fluorescent material becomes supersaturated in the isopropyl myristate layer. Alternatively, as the isopropyl alcohol evaporates the fluorescent material comes out of solution in a mirocrystalline state due to the cooling effects of the evaporating isopropyl alcohol. In either event, a substantial amount of fluorescent material is present in a very thin layer which cannot be felt, seen or smelt.

Furthermore, when using isopropyl myristate, any discoloring or yellowing of the fluorescent material is prevented. Such yellowing is believed due to a photocyclodinerization reaction of the fluorescent material which is less pronounced in the low polarity long chain isopropyl myristate.

A preferred aerosol composition comprises 0.5 gm of fluorescent material, 2.5 gm of isopropyl myristate and 12 ml of isopropyl alcohol in a 150 ml aerosol can. This composition stays active on the material to which it is applied.

In a preferred embodiment, the composition applied is colorless, odorless and has no feel thereto, and is therefore undetectable; preferably the composition is capable of transfer from one surface to another.

In an embodiment of the invention, the composition is applied immediately prior to an article, such as a dummy parcel, passing through a particular section of a department store or warehouse. The composition is suitably in aerosol form and can be sprayed onto the dummy parcel. In such case, the composition applied to the dummy parcel would be undetectable by sight, touch or smell.

Should the dummy parcel be stolen or be damaged, the composition will be transferred to the culprit. Accordingly, the employees could be brought together and then the hands of each person in turn would be scanned by UV-light. The thief or vandal would have fluorescent material on his or her hands or clothing and could be so identified.

It can thus be seen that, by utilizing the composition and method of the present invention, a thief and/or vandal can be identified. The fluorescent material of the composition of the present invention will remain on the fingers of the thief or vandal after the article or goods have been removed and possibly hidden, whereas previously such would not have been the case.

The composition and method of the present invention can be applied in any situation wherein unauthorized removal of or damage to, an article may take place, for example, in the case of transport of goods by motor vehicle, train or airplane. In such situations, it is preferable to use the fluorescent material utilized in the composition of the invention in sprinkler systems employed in vehicles used for moving articles or goods and in premises for storing or displaying articles or goods.

When such sprinkler system is utilized in premises, the sprinkler system is operated by a burglar alarm and when activated, the articles or goods in such premises, in a store or on display are sprayed with the fluorescent material as would be any personnel involved in the burglary.

A similar sprinkler system could be utilized with vehicles, particularly road vehicles, and be activated by unauthorized entry into the vehicle.

The fluorescent material used in such sprinkler systems can be water based, either as a solution or as a suspension. The solutions preferably comprises fluorescein derivatives, coumarin derivatives or diamino stilbene disulphonic acid derivatives at a concentration of 0.1 - 20wt% in the presence of a polymer latex. The suspensions preferably comprise an oxazinone derivative of 0.1-20wt% concentration in aqueous suspension stabilized by anionic surfactants and in the presence of a polymer latex.

The polymer latex is chosen so that it becomes water insoluble on drying, possibly through some type of cross linking mechanism to which end a cross-linking agent may also be added. Trace materials may be used which would normally be water soluble but are held in place by the polymer matrix. Different polymers may also be used and identified subsequently and therefore also act as "trace materials". Polymer combinations may also be used and it can thus be seen that a vast range of permutations are available through varying the polymer and varying the trace materials.

The composition and method of the present invention would suitably be utilized accompanied by warning notices etc., to indicate to any potential thief and/or vandal that the person who removes a particular parcel can be identified.

Any suitable UV-light emitting means can be utilized in the present invention for the basic determination that an article or person has come into contact with a composition of the invention. Then, a sample can be taken from the article or person and subjected to analysis for trace materials. Among the qualitative analysis methods which can be used are X-ray fluorescence, inductively coupled plasma atomic emission spectroscopy, atomic absorption spectroscopy, high performance liquid chromatography, gas chromatography/mass spectroscopy, capillary electrophoresis, scanning electron microscopy and secondary ion mass spectroscopy.

While specific reference has been made to a thief and/or vandal, it is clear that the composition and method of the invention can also be used in identifying a person involved in certain criminal activities. Also, warning notices could also be provided to indicate to any potential criminal that crime prevention measures are in place and that the criminal may be identified.

### EXAMPLE

Acetylacetonates of titanium, vanadium, chromium, manganese and cobalt were prepared, dissolved in methylene chloride. Each acetylacetonate was added to a suspension of microsponges and the solvent evaporated, leaving five lots of microsponges into which a single metal compound was absorbed. Each lot of microsponges was then added to a polymer emulsion containing 70 grams of aqueous 50wt% polymethyl methacrylate emulsion and 100 ml diluent, the final emulsion containing 0.2 grams of each metal in 100 ml diluent. To this emulsion was added 0.2 grams/100 ml of Blankophor® BSUN, a fluorescent material, and a fungicide. The mixture was stirred thoroughly, coated onto a plastic sheet and dried.

The surface of the sheet was analyzed by X-ray fluorescence for the presence of five metals.

These five metals can be added to a polymer emulsion individually or can be added in any of 23 different combinations, for a total of 28 possibilities, each possibility being a unique identifier for a material on which the emulsion is coated.

The metals mentioned hereinabove are representative of the metals which can be used for the purposes of the invention, but this disclosure should not be considered limiting as many other metals can and will be used in combination to form unique identifiers for goods.

The present invention also includes a method for improving the effectiveness of the identification compositions where the identification consists of a number of trace materials combined in a unique fashion. Analysis of the identification composition reveals the number and identity of each of the trace materials present forming the unique combination. Thus, a means of validating the identification compositions has been developed by use of simple inspection beforehand such that the final analysis may be quoted with greater certainty.

In certain cases, identification compositions may become cross contaminated by external contacts and also certain of the components may lose their effectiveness over long periods. In each of these situations, a simple, totally unrelated, guide to the number of components present in the composition would provide an excellent backup to the analytic results obtained. By way of example, a coloured particle could be included in the identification composition, the colour of which would indicate the number of components that should be present in a particular identification composition. In this connection, again by way of example, an identification composition containing six components could be red whilst one containing seven components could be blue, etc.

Such procedure increases the forensic value of the identification compositions since only when the analytical result matches that of the number indicated by the visual coding would the result be valid. Accordingly, a much more valuable evidence is provided than the analytical result alone.

## Claims

1. A composition for tracing or identifying goods or their theft comprising:
an indicator material;
a plurality of separately identifiable trace materials which are varied in such a manner as to produce unique formulations, the combination of trace materials being varied by modelling each composition on a binary string to produce a unique product; and
a solvent system for the indicator material, said solvent system containing a solvent which is volatile under conditions of application.

2. A composition according to claim 1, which is capable of transfer from one surface to another upon contact after evaporation of the volatile component.

3. A composition according to claim 1, wherein said plurality of trace materials correspond to positions in a binary string in which presence of a trace material is designated by a "1" and absence of a trace material is designated by a "0".

4. A composition according to claim 1, 2 or 3, additionally comprising a carrier material which is a polymer.

5. A composition according to claim 4, wherein the polymer is polymethyl methacrylate or polystyrenebutadiene.

6. A composition according to claim 1, 2 or 3, additionally comprising microsponges as a carrier material for said trace materials.

7. A composition according to any preceding claim, wherein the indicator material is covert.

8. A composition according to claim 7, wherein the indicator material is at least one fluorescent material.

9. A composition according to any one of claims 1 to 6, wherein the indicator materials is overt.

10. A composition material according to claim 9, wherein the indicator material is a pigment or dye.

11. A composition according to any preceding claim, wherein each said trace material is a compound of a different metal.

12. A composition according to any one of claims 1 to 10, wherein each said trace material is a different organic moiety.

13. A composition according to any preceding claim, additionally comprising a surfactant, said composition being adapted for dispensing by spraying.

14. A composition according to any one of claims 1 to 12, additionally comprising a propellant, said composition being adapted for aerosol dispensing.

15. A composition according to claim 13 or 14, wherein the indicator material comprises a fluorescein derivative or a diamino stilbene sulphonic acid derivative in an amount of 0.1 to 20% by weight in a polymer latex.

16. A composition according to claim 13 or 14, wherein the indicator material comprises an oxazinone derivative in an amount of 0.1 to 20% by weight in an aqueous suspension, and the composition additionally comprises an anionic surfactant to stabilise the suspension and a polymer latex.

17. A method for tracing or identifying goods or their theft, comprising:
applying to a surface of said goods a composition as claimed in any one of claims 1 to 16, and permitting evaporation of the volatile solvent, said composition after such evaporation being colourless and odourless and having no feel thereto;
establishing a database in which a unique combination of said plurality of said trace materials is assigned to a unique source;
detecting said composition on the basis of said indicator material and identifying the plurality of said trace materials therein; and
determining the unique source from said database.

18. A method according to claim 17, additionally comprising causing transfer of said composition to a person tampering with the surface of said goods after evaporation of the solvent by contact with the surface, and carrying out said detecting and identifying on the person.

19. A method according to claim 17 or 18, wherein the indicator material is fluorescent, additionally comprising detecting the indicator material on the surface by UV-light, and determining the trace materials in the composition to determine the source of the composition.

20. A method according to claim 17, 18 or 19, additionally comprising:
creating a binary string of predetermined length in which each specific position corresponds to a specific trace material, with the presence of a specific trace material indicated by a "1" in the specific position in the string, and the absence of a specific trace material indicated by a "0" in the specific position;
selecting a plurality of trace materials corresponding to a particular value of said binary string;
adding to at least one fluorescent material and a solvent system therefor comprising a volatile solvent the plurality of trace materials corresponding to said particular value, to form thereby said composition.

21. A method according to claim 18, additionally comprising:
detecting said indicator in said composition on a surface or a person by UV-light;
determining the trace materials in the composition on the surface or person;
determining the value of the binary string corresponding to the determined trace materials; and
using the value of the binary string to determine the source of the composition.

22. A method according to claim 21, wherein said step of using the value is performed by comparing the determined value to a list of values in a database.

23. A method according to any one of claims 16 to 22, wherein the trace materials are detected by a method selected from the group consisting of X-ray fluorescence, inductively coupled plasma atomic emission spectroscopy, atomic absorption spectroscopy, high performance liquid chromatogrdphy, gas chromatography/mass spectroscopy, capillary electrophoresis, scanning electron microscopy and secondary ion mass spectroscopy.

## Patentansprüche

1. Zusammensetzung zum Aufspüren oder Identifizieren von Waren oder deren Diebstahl, mit:
einem Indikatormaterial;
mehreren getrennt identifizierbaren Spurenmaterialien, welche in einer solchen Weise variiert werden, daß sie eindeutige Formulierungen ausbilden, wobei die Kombination der Spurenmaterialien variiert wird, indem jede Zusammensetzung in einer binären Reihenfolge modelliert wird, um ein einmaliges Produkt zu erzeugen; und
einem Lösungsmittelsystem für das Indikatormaterial, wobei das Lösungsmittelsystem ein Lösungsmittel enthält, welches unter Anwendungsbedingungen flüchtig ist.

2. Zusammensetzung nach Anspruch 1, welche von einer Oberfläche auf eine andere Oberfläche bei einem Kontakt nach der Verdampfung der flüchtigen Komponente übertragen werden kann.

3. Zusammensetzung nach Anspruch 1, wobei die mehreren Spurmaterialien Positionen in einer binären Reihenfolge entsprechen, in welcher das Vorhandensein eines Spurenmaterials mit "1" angezeigt wird und das Fehlen eines Spurenmaterials mit "0" angezeigt wird.

4. Zusammensetzung nach Anspruch 1, 2 oder 3, welche zusätzlich ein Trägermaterial aufweist, welches ein Polymer ist.

5. Zusammensetzung nach Anspruch 4, wobei das Polymer ein Polymethylmethacrylat oder Polystyrolbutadien ist.

6. Zusammensetzung nach Anspruch 1, 2 oder 3, welches zusätzlich Mikroschwämme als ein Trägermaterial für die Spurenmaterialien aufweist.

7. Zusammensetzung nach einem der vorstehenden Ansprüche, wobei das Indikatormaterial verborgen ist.

8. Zusammensetzung nach Anspruch 7, wobei das Indikatormaterial mindestens ein fluoreszierendes Material ist.

9. Zusammensetzung nach einem der Ansprüche 1 bis 6, wobei das Indikatormaterial offenliegt.

10. Zusammensetzungsmaterial nach Anspruch 9, wobei das Indikatormaterial ein Pigment oder Farbstoff ist.

11. Zusammensetzung nach einem der vorstehenden Ansprüche, wobei jedes Spurenmaterial eine Verbindung aus einem unterschiedlichen Metall ist.

12. Zusammensetzung nach einem der Ansprüche 1 bis 10, wobei jedes Spurenmaterial ein unterschiedlicher organischer Anteil ist.

13. Zusammensetzung nach einem der vorstehenden Ansprüche, welche zusätzlich ein Tensid aufweist, wobei die Zusammensetzung zur Aufbringung durch Sprühen angepaßt ist.

14. Zusammensetzung nach einem der Ansprüche 1 bis 12, welche zusätzlich ein Treibmittel aufweist, wobei die Zusammensetzung für einen Aerosolauftrag angepaßt ist.

15. Zusammensetzung nach Anspruch 13 oder 14, wobei das Indikatormaterial ein Fluoreszinderivat oder eine Diaminstilbenschwefelsäurederivat in einer Menge von 0,1 - 20 Gewichtsprozent in einem Polymerlatex aufweist.

16. Zusammensetzung nach Anspruch 13 oder 14, wobei das Indikatormaterial ein Oxazinonderivat in einer Menge von 0,1 bis 20 Gewichtsprozent in einer wäßrigen Lösung aufweist, und die Zusammensetzung zusätzlich ein anionisches Tensid zum Stabilisieren der Suspension und ein Polymerlatex aufweist.

17. Verfahren zum Aufspüren oder Identifizieren von Waren oder deren Diebstahl mit den Schritten:
Aufbringen einer Zusammensetzung gemäß einem der Ansprüche 1 bis 16 auf eine Oberfläche der Waren und Verdampfenlassen des flüchtigen Lösungsmittels, wobei die Zusammensetzung nach der Verdampfung farblos und geruchlos ist und nicht fühlbar ist;
Erstellen einer Datenbank, in welcher eine eindeutige Kombination von mehreren Spurenmaterialien einer eindeutigen Quelle zugeordnet ist;
Detektieren der Zusammensetzung auf der Basis des Indikatormaterials und Identifizieren der mehreren Spurenmaterialien darin; und
Ermitteln der eindeutigen Quelle aus der Datenbank.

18. Verfahren nach Anspruch 17, welches zusätzlich den Schritt aufweist, eine Übertragung der Zusammensetzung auf eine Person zu bewirken, welche sich an der Oberfläche der Waren nach der Verdampfung des Lösungsmittels durch einen Kontakt mit der Oberfläche zu schaffen macht, und Durchführen der Detektion und Identifikation an der Person.

19. Verfahren nach Anspruch 17 oder 18, wobei das Indikatormaterial fluoreszierend ist, und welches zusätzlich den Schritt der Detektion des Indikatormaterials auf der Oberfläche durch UV-Licht und der Ermittlung der Spurenmaterialien in der Zusammensetzung umfaßt, um die Quelle der Zusammensetzung zu ermitteln.

20. Verfahren nach Anspruch 17, 18 oder 19, welches die zusätzlichen Schritte umfaßt:
Erzeugen einer binären Reihenfolge vorbestimmter Länge, in welcher jede spezifische Position einem spezifischen Spurenmaterial entspricht, wobei das Vorhandensein eines spezifischen Spurenmaterials durch eine "1" in der spezifischen Position in der Reihenfolge angezeigt wird, und das Fehlen eines spezifischen Spurenmaterials durch eine "0" in der spezifischen Position angezeigt wird;
Auswählen mehrerer Spurenmaterialien, welche einem speziellen Wert der binären Folge entsprechen;
Hinzufügen mindestens eines fluoreszierenden Materials und eines Lösungsmittelsystems, welches ein flüssiges Lösungsmittel aufweist, wobei die mehreren Spurenmaterialien dem speziellen Wert entsprechen, um dadurch die Zusammensetzung auszubilden.

21. Verfahren nach Anspruch 18, mit den zusätzlichen Schritten:
Detektieren des Indikators in der Zusammensetzung auf einer Oberfläche oder einer Person durch UV-Licht;
Ermitteln der Spurenmaterialien in der Zusammensetzung auf der Oberfläche oder der Person;
Ermitteln des Wertes der binären Folge, welcher den ermittelten Spurenmaterialien entspricht; und
Verwenden des Wertes der binären Folge, um die Quelle der Zusammensetzung zu ermitteln.

22. Verfahren nach Anspruch 21, wobei der Schritt der Verwendung des Wertes durchgeführt wird, indem der ermittelte Wert mit einer Liste von Werten in einer Datenbank verglichen wird.

23. Verfahren nach einem der Ansprüche 16 bis 22, wobei die Spurenmaterialien mittels eines Verfahrens detektiert werden, daß aus der aus Röntgenstrahlfluoreszenz, induktiv gekoppelter Plasmaatomemisionsspektroskopie, Atomabsorptionsspektroskopie, Hochleistungsflüssigchromatographie, Gaschromatographie/Massenspektroskopie, Kapillarelektrophorese, Rasterelektronenmikroskopie und Sekundärionenmassenspektroskopie bestehenden Gruppe ausgewählt wird.

## Revendications

1. Une composition pour pister ou identifier des marchandises ou leur voleur, comprenant :
- un produit indicateur ;
- une pluralité de produits traceurs identifiables individuellement qu'on peut faire varier de façon à obtenir des formulations uniques, la combinaison de produits traceurs étant modifiée en modélisant chaque composition sur un cordon binaire pour obtenir un produit unique ; et
- un système de solvant pour le produit indicateur, ledit système de solvant contenant un solvant qui est volatil dans les conditions d'application.

2. Une composition selon la revendication 1, qui est capable de se transférer d'une surface à une autre par contact après évaporation du composant volatil.

3. Une composition selon la revendication 1, dans laquelle ladite pluralité de produits traceurs correspond à des positions sur un cordon binaire où la présence d'un produit traceur est indiquée par un chiffre "1" et l'absence de produit traceur est indiquée par un chiffre "0".

4. Une composition selon l'une quelconque des revendications 1, 2 ou 3, comprenant en outre un matériau support qui est un polymère.

5. Une composition selon la revendication 4, dans laquelle le polymère est le polyméthylméthacrylate ou le polystyrènebutadiène.

6. Une composition selon l'une quelconque des revendications 1, 2 ou 3, comprenant en outre des micro-éponges en tant que matériau support desdits produits traceurs.

7. Une composition selon l'une quelconque des revendications précédentes, dans laquelle le produit indicateur est couvert.

8. Une composition selon la revendication 7, dans laquelle le produit indicateur est au moins un produit fluorescent.

9. Une composition selon l'une quelconque des revendications 1 à 6, dans laquelle le produit indicateur est apparent.

10. Une composition selon la revendication 9, dans laquelle le produit indicateur est un pigment ou un colorant.

11. Une composition selon l'une quelconque des revendications précédentes, dans laquelle chaque produit traceur est un composé d'un métal différent.

12. Une composition selon l'une quelconque des revendications 1 à 10, dans laquelle chacun des produits traceurs est un résidu organique différent.

13. Une composition selon l'une quelconque des revendications précédentes, comprenant en outre un agent tensioactif, ladite composition étant appropriée pour être délivrée par pulvérisation.

14. Une composition selon l'une quelconque des revendications 1 à 12, comprenant en outre un propulseur, ladite composition convenant à la délivrance par aérosol.

15. Une composition selon la revendication 13 ou 14, dans laquelle le produit indicateur comprend un dérivé de fluorescéine ou un dérivé d'acide diaminostilbène sulfonique à raison de 0,1 à 20 % en poids dans un latex de polymère.

16. Une composition selon l'une quelconque des revendications 13 ou 14, dans laquelle le produit indicateur comprend un dérivé d'oxazinone à raison de 0,1 à 20 % en poids dans une suspension aqueuse et dans laquelle la composition renferme en outre un agent tensioactif anionique pour stabiliser la suspension et un latex de polymère.

17. Une méthode pour pister ou identifier des marchandises ou leur voleur, comprenant :
- l'application sur une surface desdites marchandises d'une composition selon l'une quelconque des revendications 1 à 16, l'évaporation du solvant volatil, ladite composition après cette évaporation étant incolore et inodore et ne donnant pas de sensation ;
- la construction d'une base de données dans laquelle on attribue une composition unique de ladite pluralité de produits traceurs à une source unique ;
- la détection de ladite composition d'après ledit produit indicateur et l'identification de la pluralité desdits produits traceurs présents ; et
- la détermination de la source unique à partir de ladite base de données.

18. Une méthode selon la revendication 17, comprenant en outre de pouvoir provoquer le transfert de ladite composition sur une personne entrant en contact avec la surface de ladite marchandise après évaporation du solvant par contact avec cette surface, et la mise en oeuvre desdites détection et identification sur la personne.

19. Une méthode selon la revendication 17 ou 18, dans laquelle le produit indicateur est fluorescent et comprend en outre la détection du produit indicateur sur la surface par la lumière ultra-violette et la détermination du produit indicateur dans la composition pour déterminer la source de la composition.

20. Une méthode selon l'une quelconque des revendications 17, 18 ou 19, comprenant en outre :
- la création d'un cordon binaire d'une longueur prédéterminée sur lequel chaque position spécifique correspond à un produit traceur spécifique, la présence d'un produit traceur spécifique étant indiquée par le "1" dans la position spécifique dans le cordon et l'absence de produit traceur spécifique est indiquée par un "0" dans la position spécifique ;
- le choix d'une pluralité de produits traceurs correspondant à une valeur particulière dudit cordon binaire ;
- l'addition à au moins une substance fluorescente et au moins un système de solvant de celle-ci comprenant un solvant volatil, de la pluralité de produits traceurs correspondant à ladite valeur particulière, pour former ainsi ladite composition.

21. Une méthode selon la revendication 18, comprenant en outre :
- la détection dudit indicateur dans ladite composition sur la surface ou sur une personne par de la lumière U.V. ;
- la détermination des produits traceurs dans la composition sur la surface ou la personne ;
- la détermination de la valeur du cordon binaire correspondant aux produits traceurs déterminés ; et
- l'utilisation de la valeur du cordon binaire pour déterminer la source de la composition.

22. Une méthode selon la revendication 21, dans laquelle ladite étape d'utilisation de la valeur est effectuée par comparaison de la valeur déterminée à une liste de valeurs dans une base de données.

23. Une méthode selon l'une quelconque des revendications 16 à 22, dans laquelle les produits traceurs sont détectés par une méthode choisie dans le groupe consistant en fluorescence aux rayons-X, spectroscopie d'émission atomique couplée inductivement à plasma, spectroscopie d'absorption atomique, chromatographie liquide haute performance, chromatographie en phase gazeuse/spectroscopie de masse, électrophorèse capillaire, microscopie électronique à balayage et spectroscopie de masse d'ion secondaire.
